# EUROPEAN PATENT APPLICATION

(11) **EP 4 019 568 A1**
(43) Date of publication of application: **29.06.2022**
(21) Application number: 22150651.2
(22) Date of filing: 21.03.2019
(51) Int. Cl.: C08J 3/05

(54) **AQUEOUS POLYOLEFIN DISPERSION**

(30) Priority: 22.03.2018 EP 18163354
(62) Divisional of application: 19711123.0
(71) Applicant: ACTEGA DS GmbH, 28219 Bremen (DE)
(72) Inventor: Maier, Anna, 46483 Wesel (DE); Reichenbach, Anita, 46483 Wesel (DE)
(74) Representative: Altana IP Department

(57) **Abstract**

The invention relates to an aqueous polyolefin dispersion comprising
from 50 to 100 wt.% of a aqueous dispersion A comprising the following ingredients:
from 30 to 90 wt.% of A1, a copolymer of polyethylene and (meth)acrylic acid [E(M)AA] or a mixture of different copolymers of polyethylene and (meth)acrylic acid,
from 10 to 70 wt.% of A2, another polymer, not being a copolymer of polyethylene and (meth)acrylic acid, or a mixture of other polymers, and from 0 - 15 wt.% of additive
from 0 to 50 wt.% of a compound B, where compound B is a material dispersable or soluble in water and different from any of the ingredients of dispersion A
wherein
the wt.% of A and B is based on the solid content of the whole aqueous polyolefin dispersion and
the wt% of the ingredients of dispersion A is based on the solid content of dispersion A,
the sum of the wt.% of ingredients i to iii of dispersion A is 100%.

## Description

The present invention relates to aqueous polyolefin dispersions and a process for the preparation thereof. More in particular, the current invention relates to secondary polyolefin dispersions, i.e. dispersions prepared from dispersing polymer(s) in water.

In general, polymer dispersions in a carrier liquid can be prepared by high shear mixing of the polymer in the carrier liquid at a temperature that is above the melting temperature of the polymer. Upon cooling the mixture, a dispersion is obtained of finely divided solid polymer particles in the carrier liquid. Such dispersions are suitable for a number of applications, such as coatings for flexible packaging, heat seal compositions, adhesion promotor, barrier coating, binder, and surface modification having a special haptic effect.

In WO2001/64774 a process is described for making aqueous polyolefin dispersions using an extrusion process. In this process, all ingredients for the dispersion, including water, are extruded at elevated temperature and pressure. At the exit of the extruder the dispersion is collected in a water-cooled pressurized vessel.

In WO2005/085331 a similar process is described for making polyolefin dispersions using an extrusion process.

Disadvantage of these known processes is that there is a relatively high pressure build-up inside the extruder and that is not evident how the dispersion is collected from the extruder. Further, in these documents it is not disclosed how homogeneous dispersions can be prepared from a combination of starting materials, in particular combinations of high molecular weight polar and non-polar polymers.

The present invention relates to novel aqueous dispersions of polymer blends and a process for the preparation of such blends.

In one embodiment, the present invention relates to an aqueous polyolefin dispersion comprising
a. from 50 to 100 wt.% of a aqueous dispersion A comprising the following ingredients:
   i. from 30 to 90 wt.% of A1, a copolymer of polyethylene and (meth)acrylic acid [E(M)AA] or a mixture of different copolymers of polyethylene and (meth)acrylic acid,
   ii. from 10 to 70 wt.% of A2, another polymer, not being a copolymer of polyethylene and (meth)acrylic acid, or a mixture of other polymers, and
   iii. from 0 - 15 wt.% of an additive
b. from 0 to 50 wt.% of a compound B, where compound B is a material dispersable or soluble in water and different from any of the ingredients of dispersion A
   wherein
   - the wt.% of A and B is based on the solid content of the whole aqueous polyolefin dispersion,
   - the wt% of the ingredients of dispersion A is based on the solid content of dispersion A,
   - the sum of the wt.% of ingredients i to iii of dispersion A is 100% and
   - A2 is selected from the group consisting of copolymers of ethylene and vinyl acetate (EVA), copolymers of ethylene and vinyl acetate (EVA) modified with maleic anhydride, polyolefins modified with maleic anhydride, polyolefin elastomers, styrene butadiene block copolymers (SBS), random copolymers (SBC), ethylene-propylene-non-conjugated diene terpolymer (EPDM), maleic anhydride modified ethylene-propylene-non-conjugated diene terpolymer, and co- and terpolymers of ethane, propene, and 1-butene.

In a further embodiment, the invention relates to an aqueous polyolefin dispersion wherein the dispersion comprises a copolymer of polyethylene and (meth)acrylic acid having a content of (meth)acrylic based groups in the copolymer of at least 10 wt.%, wherein the wt.% is based on the total weight of the copolymer.

In yet a further embodiment the present invention relates to a process for the preparation of the aqueous polyolefin dispersion wherein
a. in a first step all solid components of dispersion A are intimately mixed at a temperature in the range of 50°C to 200 °C after which a homogenous compound of all components is obtained and
b. in a next step the homogeneous compound is mixed with water, compound B, and a neutralizing agent at a temperature which is 2 to 20°C above the highest melting temperature of the components mixed in the first step until an aqueous dispersion is obtained wherein all dispersed particles have a particle size below 150 µm.

The "premixing step" a. allows the preparation of an aqueous dispersion without the use of (additional) emulsifiers. It is advantageous to avoid these emulsifiers in the dispersion because of food safe reasons and properties in connection with heat sealability.

In a further embodiment, the first step in the process according to the present invention is performed in a twin screw extruder.

In a further embodiment the process according to the present invention the mixing of the homogeneous compound with water, compound B and a neutralizing compound is performed under elevated pressure.

In yet another embodiment the process according to the present invention the process wherein the mixing of the homogeneous compound with water, compound B and a neutralizing compound is performed at a pressure which is higher than the vapour pressure of water at the mixing temperature.

### Aqueous polymer dispersion A

The aqueous polyolefin dispersion of the current invention comprises an aqueous polymer dispersion A having the following ingredients:
i. from 30 to 90 wt.% of a copolymer of polyethylene and (meth)acrylic acid [E(M)AA] or a mixture of different copolymers of polyethylene and (meth)acrylic acid,
ii. from 10 to 70 wt.% of another polymer, not being a copolymer of polyethylene and (meth)acrylic acid, or a mixture of other polymers, and
iii. from 0 - 15 wt.% of an additive
wherein the wt% of the ingredients of dispersion A is based on the solid content of dispersion A, and the sum of the wt.% of ingredients i to iii of dispersion A is 100%.

The copolymer of polyethylene and (meth)acrylic acid that is present in polymer dispersion A can be any copolymer of polyethylene and (meth)acrylic acid as long as such copolymer is melt processable, for example a copolymer having a Melt Flow Index (MFI) of between 2 to 600 g/10 min, as measured at 190 °C at a load of 2,16 kg

In a further embodiment the copolymer of polyethylene and (meth)acrylic acid that is present in polymer dispersion A has a content of (meth)acrylic acid based groups in the copolymer of at least 10 wt.%, preferably more than 15 wt.%, based on the total weight of the copolymer.

Examples of suitable commercially available copolymers of polyethylene and (meth)acrylic acid that can be used in the dispersion according to the present invention include Primacor^{™} 5980 (ex. Dow Chemicals), Nucrel^{®} 2806 (ex. DuPont) and Escor^{™} 5200 (ex Exxonmobil).

The other polymer that is present in polymer dispersion A can be selected based upon the intended application of the aqueous dispersion. Suitable other polymers include copolymers of ethylene and vinyl acetate (EVA), copolymers of ethylene and vinyl acetate (EVA) modified with maleic anhydride, polyolefins modified with maleic anhydride, polyolefin elastomers, styrene butadiene block copolymers (SBS), random copolymers (SBC), ethylene-propylene-non-conjugated diene terpolymer (EPDM), maleic anhydride modified ethylene-propylene-non-conjugated diene terpolymer, and co- and terpolymers of ethane, propene, and 1-butene.

The use of these other polymers (A2) provide improved haptic properties and/ or better characteristics in connection with heat sealability which is important in case the aqueous polyolefin dispersion according to the present invention is used as a heat sealing varnish, especially for aluminium foils. According to one embodiment the aqueous dispersion of the present invention is a heat sealable varnish.

The improvement in respect to heat sealabilty is generally combined with the enhancement of the corresponding sealing strength, especially if aluminium is used as substrate.

In case aluminium is used as substrate in a heat sealing process the sealing strength is generally enhanced if (according to the present invention) A2 is selected from the group consisting of copolymers of ethylene and vinyl acetate (EVA), copolymers of ethylene and vinyl acetate (EVA) modified with maleic anhydride, polyolefins modified with maleic anhydride, polyolefin elastomers, styrene butadiene block copolymers (SBS), random copolymers (SBC), ethylene-propylene-non-conjugated diene terpolymer (EPDM), maleic anhydride modified ethylene-propylene-non-conjugated diene terpolymer, and co- and terpolymers of ethane, propene, and 1-butene.

According to one embodiment of the present invention A2 is selected from the group consisting of copolymers of ethylene and vinyl acetate (EVA) and copolymers of ethylene and vinyl acetate (EVA) modified with maleic anhydride.

Thus, one embodiment of the present invention relates to the use of an aqueous polyolefin dispersion as described above or an aqueous polyolefin dispersion producible by a process as described above as a heat sealing varnish for aluminium foils.

Examples of suitable commercially available other polymers that can be used in polymer dispersion A according to the present invention include Polybond^{®} 3000, Polybond 3349^{®} and Royaltuf^{®} (all ex Addivant), Orevac^{®} T9305 (ex. Arkema), Affinity GA1950 (ex. Dow), Bynel^{®} E418 (ex. DuPont), Vestoplast^{®} 508, Vestoplast^{®} 751 (both ex. Evonik), Escorene FL00328, Escorene AD0428EM1, Vistamax 6202 (all ex. ExxonMobil), and Kraton^{®} D1157 (ex. Kraton).

The additive that can be present in the aqueous dispersion according to the present invention includes dispersing agents, rheology additives, adhesion promotors, tackifiers, defoamers, fillers, pigments and any other material that is known for use in polymer dispersions or polymer compositions.

Examples of suitable additives that can be used in the aqueous dispersion according to the present invention include stearic acid, oleic acid and other long chain carboxylic acids, clays, waxes, such as paraffin wax and polyolefin wax, and dioctyl sodium sulfosuccinate.

### Compound B

Compound B is optionally present in the aqueous dispersion according to the present invention. Compound B is a material that is dispersable or soluable in water or a mixture of materials that are dispersable or soluble in water and different from any of the ingredients of dispersion A. For example, compound B can be added to improve the ability to recycle materials comprising the aqueous dispersion according to the present invention or materials or articles that are formed by evaporating the solvent from this dispersion. Compound B can be an inorganic material or an organic material. For example, Compound B can be a polymer or a mixture of polymers, dispersable or soluble in water.

Examples of suitable materials that can be used as compound B in the aqueous dispersion according to the present invention include polyvinylpyrrolidone and polyethyleneglycol.

In the process for the preparation of the aqueous polyolefin dispersion according to the present invention the homogenized compound obtained in the first step is mixed with water, compound B, and a neutralizing agent at a temperature which is 2 to 20°C above the highest melting temperature of the components mixed in the first step until an aqueous dispersion is obtained wherein all dispersed particles have a particle size below 150 µm.

A temperature which is 2 to 20°C above the highest melting temperature of the components mixed in the first step means a temperatures which is 2 to 20°C above the highest melting temperature of any of the individual components that are mixed to obtain the homogenized compound. For example, if the homogenized compound is obtained by 3 ingredients, A1, A2 and A3, each having their own melting temperature (T_{MA1}, T_{MA2}, T_{MA3}), where T_{MA2} > T_{MA1} > T_{MA3}, 2 to 20°C above the highest melting temperature means 2 to 20 °C above T_{MA2}.

The neutralizing agent that is used in the process for the preparation of the aqueous polyolefin dispersion according to the present invention can be any basic aqueous solution, for example an aqueous solution of NH₃, NaOH or KOH.

The size of the particles that are present in the aqueous polyolefin dispersion according to the present invention should be < 150 µm.This particle size can be measured by using a Sympatec Rhodos laser diffraction system, using the Quixel unit for dispersions. For each measurement, 1 ml of a dispersion was added to the 1 l dispersing unit of the Quixel unit, where the dispersing unit was filled with water with a pH in the range of 7 - 10.

The process according to the present invention allows for the use of ingredients that are approved as indirect food additives, i.e. substances that may come into contact with food as part of packaging or processing equipment, but are not intended to be added directly to food. The ingredients are sometimes referred to as food safe materials or material suited for direct food contact. In this connection, "food safe" means that these materials satisfy the criteria of the European Union Regulation "EU 10-2011 for plastics intended to come into contact with food". In one embodiment of the present invention, all ingredients that are present in the aqueous polymer dispersion are food safe materials or material suited for direct food contact.

In general, the aqueous polyolefin dispersion according to the present invention has the following properties:
- Solid content 10 - 50 wt.%
- Viscosity 30 - 800 mPa*s
- Storage stability ≥ 6 months
- Average particle size from 1 to 50 µm

The process according to the present invention provides a kind of premixing of (dry) components which is performed in the first step: All solid components of dispersion A, especially component A1 and A2 are intimately mixed at a temperature in the range of 50°C to 200 °C after which a homogenous compound of all components is obtained. Said premixing step seems to be the basis for the generation of hybrid particles containing both A1 and A2. In the next step the homogeneous compound provided in the premixing step is further mixed with water, preferably with compound B, and a neutralizing agent: The result is an aqueous polyolefin dispersion comprising dispersed hybrid particles containing both A1 the copolymer of polyethylene and (meth)acrylic acid and A2 the another polymer, not being a copolymer of polyethylene and (meth)acrylic acid.

In order to provide experimental information regarding the composition of the dispersion as analytical methods especially Differential Scanning Calorimetry (DSC) and/ or IR spectroscopy might be used. According to the said DSC method the melting temperatures (melting ranges) were determined on the one hand for the used raw materials (polymers) and on the other hand for the produced compounds (solid content of the dispersion). The melting ranges of the produced compounds were generally much broader than of the used raw materials.

### DEFINITIONS

Within the content of this description the following definitions are used
- (meth)acrylic means acrylic and/or methacrylic;
- A homogeneous polymer containing compound is a compound that shows no optical defects when cast into a film with a thickness in the range of 1 to 2 mm.

### Measurement Methods

The following measurement methods were used to characterize the individual components and the obtained products mentioned in this description:
*Melt Flow Index* (MFI) was determined in accordance with ISO 1133 in a Zwick/Roell extrusion plastometer. The MFI is measured at 190 °C at a load of 2,16 kg. For each measurement, 6 gr of material was heated for 5 minutes inside the measurement cylinder prior to the start of a measurement. The MFI is the average value for three portions.

The *melting temperature* of a component was determined using differential scanning calorimetry according to ISO 11357. For the measurement a Mettler Toledo DSCStar System was used. The measurements were carried out under nitrogen in a temperature range of -60 to 200 °C and a heating rate of 10 K/min.

The *solid content* of a dispersion was determined by heating 1 g of the dispersion in an aluminum cup during 30 minutes at 150 °C. The solid content is the ratio between the weight of the sample after heating and before heating. The solid content is the average of 3 measurements.

The *viscosity* of a dispersion was measured using a Thermo Fisher Scientific HAAKE^{™} Rotation Rheometer RV1 at 20 °C using a double-cone DC60/2 Ti L configuration in combination with a MPC/DC60 geometry. The measurements were performed during 120 s at shear rates between 0 and 120 s⁻¹. The viscosity values at shear rate 114 s⁻¹ are evaluated.

The *particle size* was measured using a Sympatec Rhodos laser diffraction system, using the Quixel unit for dispersions. For each measurement, 1 ml of a dispersion was added to the 1 l dispersing unit of the Quixel unit, where the dispersing unit was filled with water with a pH in the range of 7 - 10. The further settings are cell size 2 mm, ultra sound duration 45 s with a break of 3 s.

The *pH value* was determined by a pH meter PCE-228 of PCE Instruments.

The *evidence of the raw materials* were determined with a Thermo Fisher Scientific Nicolet iS5 FTIR-Spectrometer with iD5 ATR module and Zinc selenide crystal.

### EXAMPLES

Various aqueous dispersions were prepared using the following procedure:
- In a first step a compound was prepared by mixing and kneading the individual ingredients in a Leistritz ZSE 18 Maxx twin screw extruder at a temperature in the range of 80 - 150 °C (temperature was selected based on the ingredients), where different temperature zones were created inside the extruder. The pressure inside the extruder was 35 bar maximum.
- In a next step the extruded compound was fed into a Büchi 2I Pressure reactor, equipped with a dissolver mixer operating at speeds between 100 - 1000 rpm. The dispersion was prepared at elevated temperature in the range of 90 - 150 °C at sometimes elevated pressure (additional pressure in the range of 0 - 100 bar).

The ingredients and conditions for each example are given in Table 1 below.

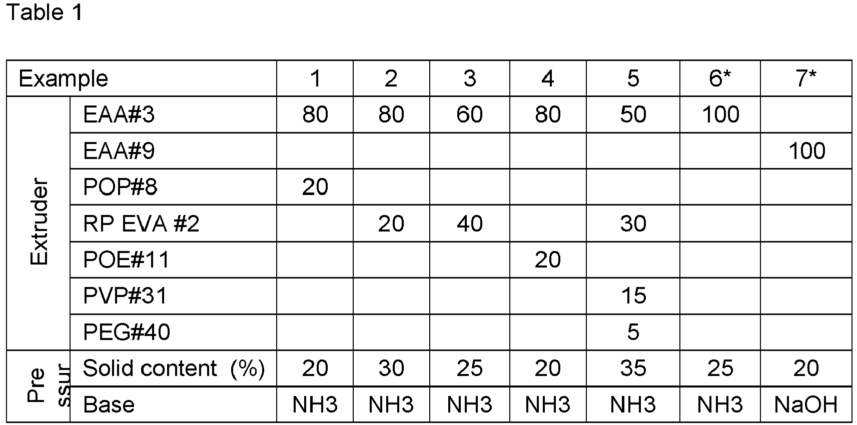

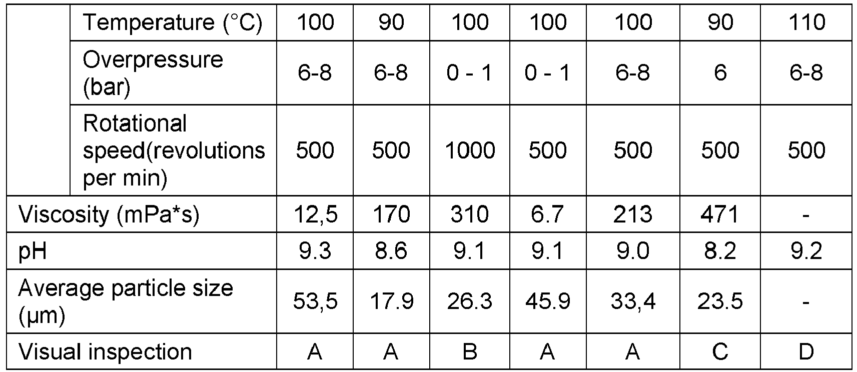

EAA#3: PRIMACOR^{®} 5980; dispersible polymer which is an ethylene acrylic acid copolymer (20 wt % comonomer), "DOW'
EAA#9: Escor 5200, ethylene acrylic acid copolymer (15 wt % comonomer), "ExxonMobil"
POP#8: AFFINITYTM GA 1950, POP, polyolefin plastomer containing Ethylen-1-Octen, "DOW"
RP EVA #2: OREVAC^{®} T 9305, a random terpolymer of ethylene, vinyl acetate and maleic anhydride, "ARKEMA"
POE#11: VistamaxxTM 6202 POE; primarily composed of isotactic propylene repeat units with random ethylene distribution, "ExxonMobil" -
PVP#31: Kollidon 17 PF; soluble polyvinylpyrrolidone, Mw: 7000-11000, "BASF"
PEG#40: Polyethylenglycol 10000, Mw: 9000-12500, "Merck"
*) Comparative Example
A: Milky dispersion
B: Milky viscous dispersion
C: dispersion with discrete particles
D: High viscous paste

## Claims

1. Aqueous polyolefin dispersion comprising
a. from 50 to 100 wt.% of a aqueous dispersion A comprising the following ingredients:
a. from 30 to 90 wt.% of A1, a copolymer of polyethylene and (meth)acrylic acid [E(M)AA] or a mixture of different copolymers of polyethylene and (meth)acrylic acid,
b. from 10 to 70 wt.% of A2, another polymer, not being a copolymer of polyethylene and (meth)acrylic acid, or a mixture of other polymers, and
c. from 0 - 15 wt.% of additive
b. from 0 to 50 wt.% of a compound B, where compound B is a material dispersable or soluble in water and different from any of the ingredients of dispersion A
wherein
- the wt.% of A and B is based on the solid content of the whole aqueous polyolefin dispersion,
- the wt% of the ingredients of dispersion A is based on the solid content of dispersion A,
- the sum of the wt.% of ingredients i to iii of dispersion A is 100%, and
- A2 is selected from the group consisting of copolymers of ethylene and vinyl acetate (EVA), copolymers of ethylene and vinyl acetate (EVA) modified with maleic anhydride, polyolefins modified with maleic anhydride, polyolefin elastomers, styrene butadiene block copolymers (SBS), random copolymers (SBC), ethylene-propylene-non-conjugated diene terpolymer (EPDM), maleic anhydride modified ethylene-propylene-non-conjugated diene terpolymer, and co- and terpolymers of ethane, propene, and 1-butene and
where the aqueous polyolefin dispersion is a heat sealable varnish.

2. Aqueous polyolefin dispersion according to claim 1 wherein the copolymer of polyethylene and (meth)acrylic acid has a content of (meth)acrylic based groups in the copolymer of at least 15 wt.%, wherein the wt.% is based on the total weight of the copolymer.

3. Aqueous polyolefin dispersion according to claim 1 wherein all ingredients and compounds are food safe materials.

4. Aqueous polyolefin dispersion according to claim 1 wherein A2 is selected from the group consisting of copolymers of ethylene and vinyl acetate (EVA) and copolymers of ethylene and vinyl acetate (EVA) modified with maleic anhydride.

5. Aqueous polyolefin dispersion according to claim 1 wherein the aqueous polyolefin dispersion contains dispersed hybrid particles containing both A1 the copolymer of polyethylene and (meth)acrylic acid and A2 the another polymer, not being a copolymer of polyethylene and (meth)acrylic acid.

6. Aqueous polyolefin dispersion according to one of the claims 1 - 5, wherein the aqueous polyolefine dispersion contains Polybond^{®} 3000, Polybond 3349^{®}, Orevac^{®} T9305, Affinity GA1950, Bynel^{®} E418, Vestoplast^{®} 508, Vestoplast^{®} 751, Escorene FL00328, Escorene AD0428EM1, Vistamax 6202, and/or Kraton^{®} D1157.

7. Process for the preparation of the aqueous polyolefin dispersion of any of claims 1 to 6 wherein
a. in a first step all solid components of dispersion A are intimately mixed at a temperature in the range of 50°C to 200 °C after which a homogenous compound of all components is obtained and
b. in a next step the homogeneous compound is mixed with water, compound B, and a neutralizing agent at a temperature which is 2 to 20°C above the highest melting temperature of the components mixed in the first step until an aqueous dispersion is obtained wherein all dispersed particles have a particle size below 150 µm.

8. Process according to claim 7 wherein the mixing in the first step is performed in a twin screw extruder.

9. Process according to claim 7 or 8 wherein the mixing of the homogeneous compound with water, compound B and a neutralizing compound is performed under elevated pressure.

10. Process according to claim 9 wherein the mixing of the homogeneous compound with water, compound B and a neutralizing compound is performed at a pressure which is higher than the vapour pressure of water at the mixing temperature.

11. Use of an aqueous polyolefin dispersion according to one of the claims 1 - 6 or an aqueous polyolefin dispersion producible by a process according to one of the claims 7 - 10 as a heat sealing varnish for aluminium foils.

12. Use according to claim 11, wherein the aluminium foil contains passivated aluminium.

13. Use of an aqueous polyolefin dispersion according to one of the claims 1 - 6 or an aqueous polyolefin dispersion producible by a process according to one of the claims 7 - 10 as a non-heat sealable varnish.
